# EUROPEAN PATENT SPECIFICATION

(11) **EP 2 741 512 B1**
(45) Date of publication and mention of the grant of the patent: **05.04.2017**
(21) Application number: 13192119.9
(22) Date of filing: 08.11.2013
(51) Int. Cl.: H04N 21/4147, H04N 21/266, H04N 21/4227, G06Q 50/00, H04N 21/61

(54) **Method and system for sending remote recording and/or remote broadcast tagging command to set-top boxes over social sharing networks**
Verfahren und System zum Senden einer remoten Aufzeichnung und/oder remoter Rundfunktagbefehle für Digitalempfängersysteme über soziale Netzwerke
Procédé et système pour envoyer un enregistrement à distance et/ou une commande d'étiquetage de diffusion à distance à des décodeurs sur des réseaux sociaux de partage

(30) Priority: 04.12.2012 TR 201214098
(43) Date of publication of application: 11.06.2014
(73) Proprietor: KREA ICERIK HIZMETLERI VE PRODUKSIYON ANONIM SIRKETI, Istanbul (TR)
(72) Inventor: Özcan, Hünkar, 34353 Istanbul (TR)
(74) Representative: Kaya, Erdem

(56) References cited:
- WO-A1-2012/067973
- WO-A1-2012/119659
- US-A1- 2009 293 079
- US-A1- 2009 319 603
- US-A1- 2011 047 013
- US-A1- 2012 174 157
- US-A1- 2012 254 917

## Description

### Technical Field

The invention relates to the event where the users can send remote recording and/or remote broadcast tagging operation command to personal video recorder set-top boxes over the social media thanks to the interaction between the broadcast content introductions about the digital publishing that are shared in the social sharing networks and users of the social sharing networks.

### Background Art

Nowadays, the Internet pages that are created for meeting, getting in contact, sharing content, constituting discussion environment and forming groups where people of same internet come together for the Internet users are defined as social networks (social sharing networks).

Social networks, blogs, micro blogs, instant messaging programs, chat pages, forums etc. where people can share content and information among each other creates the social media. The word "social" is used for society and social facts and "media" means the communication environment where people communicate with events and other people. In this case, social media means the platform where the communication instrument is the person himself/herself, and the person publishes and shares the content created by herself/himself. The major difference of the social media comparing to classical media is the existence of a mutual communication. It is a platform where it is possible for persons to communicate with each other and for foundations to communicate with persons and receive feedback. Even though the social media initially looks like dialogs among the individuals or small groups, these dialogs show a quick rise in time and shared by large communities, when the number of the ones dealing with the shared information or content is regarded.

The social media, that has become an important capability for advertising activities of the companies bring opportunities and dangers for the companies as the Internet users share all the positive and negative experiences. For this reason, the companies should analyze the social media throughly and be respective for progresses in accordance with the demand and need of the user profiles before starting to manage social media accounts. Thanks to the fact that companies appear in social media; it is possible for them to promote relations with customers, create trademark familiarness by creating awareness, make introductions by giving chance of reflecting the trademark, inform people about the special discounts and opportunities and expand the market share by making marketing research.

Interactive marketing uses the cutting edge technologies nowadays and aims to use any new development. This happening changes the traditional methods of the marketing and provides it with a new face and shape. Companies try to sell their products and services and modify the behaviors of their customers by making use of the Internet advertising and marketing adventures, getting in direct communication with their customers. Companies can obtain any necessary information about costumers in these areas, make necessary measurements and renew themselves by instantly learning response of customers. At the same time, the companies can make personalized value offer in accordance with the expectation of their customers and see the feedbacks instantly thanks to this peer to peer communication.

By means of the social media, the Internet users have the opportunity of reaching what they search for and are interested in quickly. The micro blogs that provide the people with instantly sharing what they do are used by professionals for information and news sharing. A micro blog is a platform where people or foundations share what they do, the news about them, what they feel and their thoughts in short messages at the very moment. Shortly, it can be regarded as a social messaging platform. Micro blogs are the fastest platforms that announce a development that happens anywhere on earth. Their capably of being easily used through mobile devices provides the quick spread of the content in social media.

Social media optimization is the process of easily spreading the information and content of an Internet page to the social media channels and online societies by the social media users by optimizing the Internet page. The simplest examples of the social media optimization are the "share", "like" etc. icons that are seen almost in any page today in Internet. These icons provide that the contents are spread quickly among the social media users and reach the masses.

Spread of the addresses of the Internet pages in social platforms is called as social bookmarking. The term social bookmarking generally means more visitors and the products you sell reach the masses through social sharing pages. It provides that the Internet users can share the Internet sites and Internet pages with others. The Internet users follow the shared contents by rating and commenting. Thanks to this, pictures and video that can attract the attention of the people can come to the forefront among millions of contents.

In the background art, there are various methods for remote broadcast tagging and/or remote recording command to the set-top boxes. The users can do the remote broadcast tagging and remote recording processes by sending SMS (short message service) via their cell phones, giving related commands to the call centers of the broadcast foundation, though online processes in Internet environment or various applications that they install on their mobile devices.

There exist some problems in the application of these methods and some efforts to improve these methods. Security and fast access perception of users, meeting the expectation of the users according to the broadcast foundations, adaptation of the technology to the sector and gaining prestige are really important in this aspect.

Document WO 2012/067973 discloses a method where the web site of a satellite TV provider is launched when a user selects encoded content identifiers posted in social networking messages.

In the United States Patent document numbered US20120011553, the connection among the user devices, set-top boxes and social sharing networks is disclosed. It describes the selection of the set-top boxes to which the messages that are created via user devices will reach, enciphering of relevant messages and their reach to the set-top boxes, connecting social sharing networks via set-top boxes and advertising the broadcasts that are watched via set-top boxes for advertising purposes. Within the disclosed patent document, sending any operation command to the set-top boxes over social sharing networks is not mentioned.

Consequently, the need for the structuring that solves the abovementioned disadvantages, provides the user to send record and/or broadcast tagging operation command to the further set-top boxes with personal video recorder feature and the fact that the solutions in the background art are not sufficient has made it essential to carry out such a development in the art.

### Brief Description of the Invention

The invention aims to solve the abovementioned disadvantage and is built being inspired from the current cases.

The object according to the invention is to send commands like remote record and/or remote broadcast tagging intended for the content of the introductions (films, TV series, sport, documentary etc.) that belong to the broadcast content, which is shared to the set-top boxes by means of the sharing of the users via social sharing networks to other users and which will normally be shared by the broadcast foundation via social sharing networks (twitter, facebook, etc.) in respect of the digital broadcast sector.

Another object according to the invention is to send commands like remote record and/or remote broadcast tagging intended for content of the liked introduction to the set-top boxes thanks to the fact that the introductions, which belong to the broadcast contents and will be shared by the broadcast foundation through social networks, are liked by the users.

Another object according to the invention is to provide a very fast, simple and safe transmit of the operation commands, which can be sent to set-top boxes while the users are checking over the social sharing networks, into the set-top boxes.

Another object according to the invention is to advertize the broadcast foundation and relevant broadcast contents in the social media by the spread of the contents, which are watched and liked by users and wished to be suggested to other users for watching, to larger masses via social sharing networks.

All the structural and characteristics features and all the advantages of the invention will be more clearly understood from the following figures and detailed description for referring to these figure and for this reason, it is necessary that the evaluation be done by taking these figures and detailed description into account.

### Figures that Assist in Understanding the Invention

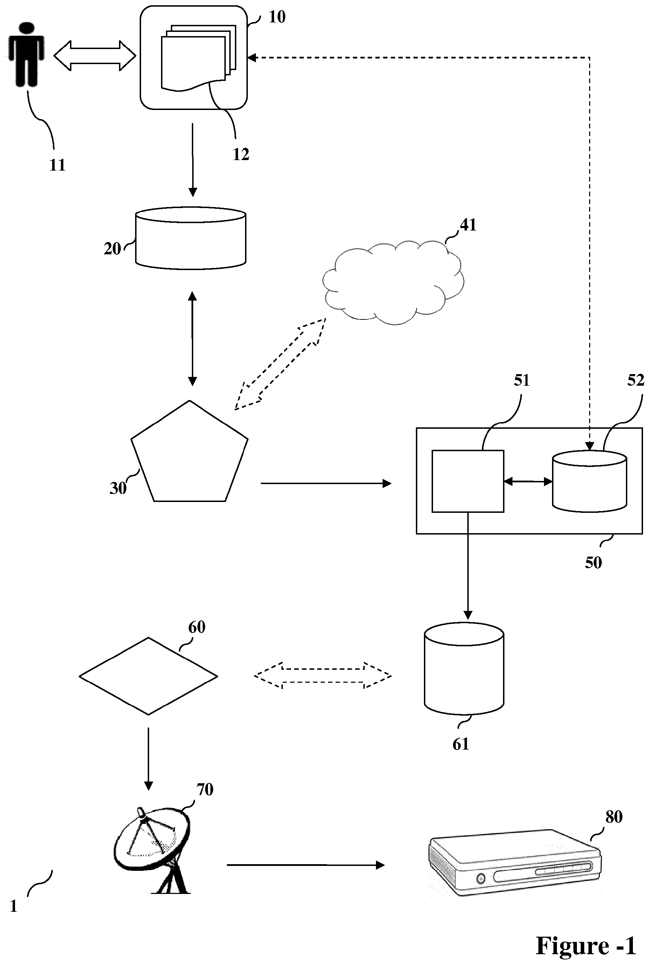

**Figure 1** **-** is the schematic block diagram of the system that sends the remote record and/or remote broadcast tagging operation command to set-top boxes over the social sharing networks according to the invention.

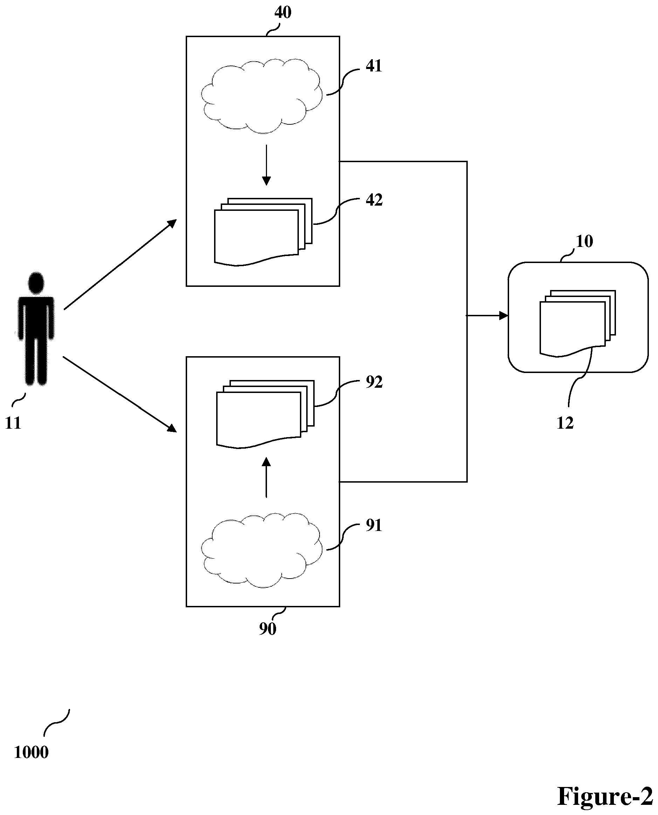

**Figure 2** **-** is the flow diagram of the method that provides the matched the social sharing network account of the user with the digital broadcast subscription account.

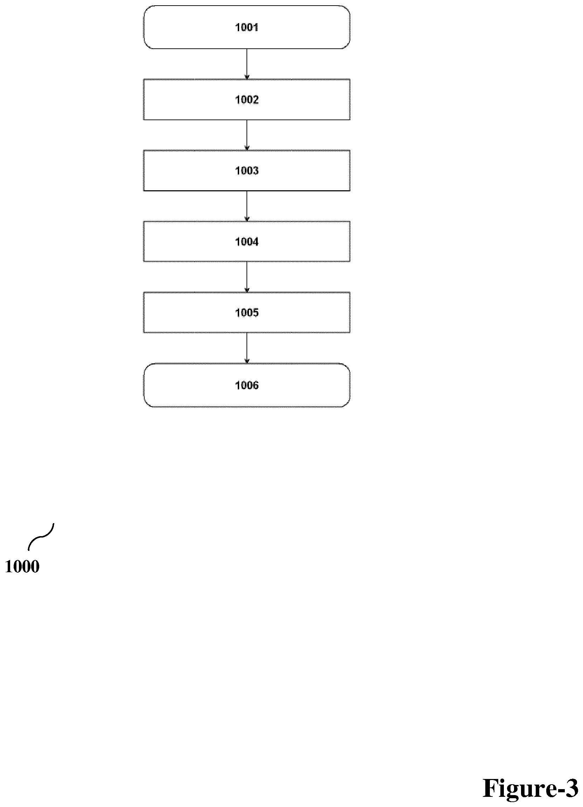

**Figure 3** **-** is the schematic block diagram of the method that provides the matched the social sharing network account of the user with the digital broadcast subscription account.

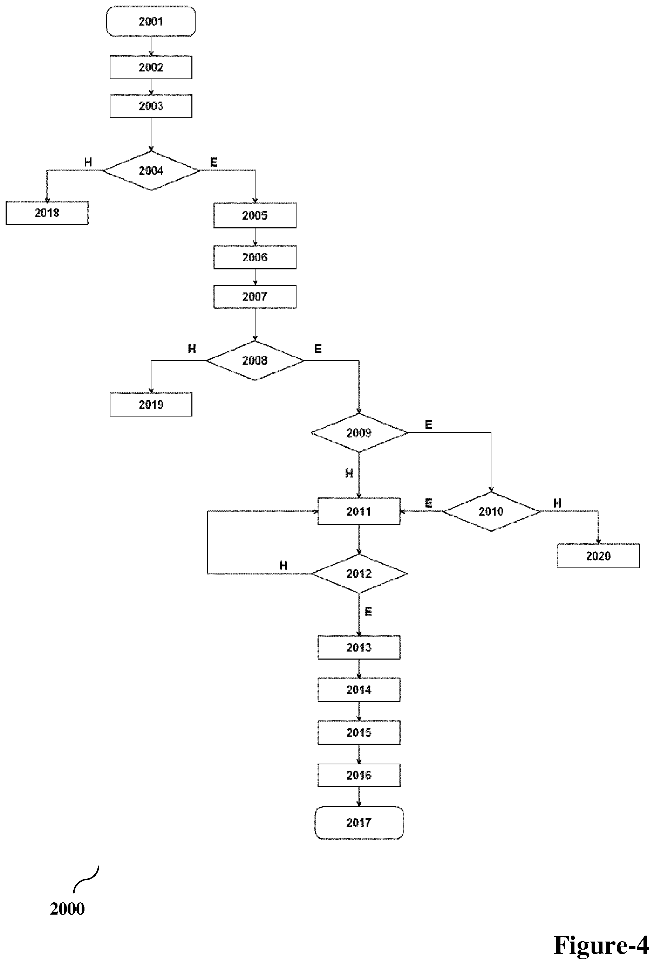

**Figure 4** **-** is the flow diagram of the method that provides remote broadcast and/or remote broadcast tagging for the set-top boxes through the broadcast that is advertized over the social sharing networks.

The parts in the figures are numbered and the provisions of these numbers are given below.

### Description of the References

- 1.: Remote access system
- 10.: Matched user account information
- 11.: User
- 12.: Digital broadcast data input application
- 20.: Database
- 30.: Social media tracking application
- 40.: Social sharing network user subscription account
- 41.: Social sharing network
- 42.: Social sharing network user subscription information
- 50.: Broadcaster information system
- 51.: Broadcaster information system signal server
- 52.: Broadcaster information system user database
- 60.: Conditional access system
- 61.: Conditional access system database
- 70.: Satellite
- 80.: Personal video recorder set-top box
- 90.: Digital broadcast user subscription account
- 91.: Digital broadcast
- 92.: Digital broadcast user subscription information
- 1000.: Account matching method
- 1001.: Entering the digital broadcast user account subscription information to the digital broadcast data input application
- 1002.: Selection of the social sharing network by the user
- 1003.: Entering the social sharing network user subscription information
- 1004.: Determination of the interaction preferences specific for the social sharing network selected by the user
- 1005.: Matching the digital broadcast user subscription account and social sharing network subscription account of the user
- 1006.: Saving the matched user account information and user interaction preferences into the database
- 2000.: Remote access method
- 2001.: Advertizing the broadcast content in social media sharing networks
- 2002.: Determination of the interaction between the user and content introductions shared in the social sharing networks with the help of API by the social media tracking application
- 2003.: Analysis of the content information from the broadcast content introduction in interaction with the user by the social media tracking application
- 2004.: Querying whether the users in interaction have made an account matching by the social media tracking application over a database
- 2005.: Sending back the information that belongs to the user to the social media tracking application by the database for conveying it into the broadcaster information system
- 2006.: Determination of the operation command by checking the interaction preferences of the user by the social media tracking application
- 2007.: Transfer of the matched user information confirmed in the database, analyzed content information and operation command of the user by the social media tracking application to the broadcaster information system
- 2008.: Querying whether the user is a subscriber in broadcaster information system
- 2009.: Querying whether PVR set-top box is required for the operation command of the user in broadcaster information system
- 2010.: Querying whether the user has PVR set-top box in broadcaster information system
- 2011.: Transfer of the user's operation command and relevant information to the CAS database by the broadcaster information system signal server
- 2012.: Making of the task query by the CAS to the CAS database
- 2013.: Notification of the tasks from the CAS database to the CAS
- 2014.: Creation of the relevant EMM's by the CAS
- 2015.: Transmittal of the relevant EMM's to the satellite
- 2016.: Reaching of the relevant EMM's to the PVR set-top boxes via satellite
- 2017.: Accomplishment of the remote access of the user to the PVR set-top boxes
- 2018.: Notification of the error message to the user
- 2019.: Notification of the error message to the user
- 2020.: Notification of the error message to the user

- API:: (Application Programming Interface)
- CAS:: (Conditional Access System)
- EMM:: (Entitlement Management Message)
- PVR:: (Personal Video Recorder)

### Detailed Description of the Invention

The present invention is given by the appended claims. By means of the system (1) according to the invention, the users (11) can send remote record and/or remote broadcast tagging operation command to personal video recorder set-top boxes (80) thanks to the interaction between the broadcast (films, TV series, documentary etc.) content introductions about the digital broadcast (91) that are shared in the social sharing networks (41) and users of the social sharing networks. The digital broadcast user subscription account information (90) and social sharing network user subscription account information (40) must match for the users (11) to able to send the said operation command.

For account matching, the users (11) enter their digital broadcast user subscription information (92) into the data input application (12) over the digital broadcast (91) Internet site to which they are subscribed. They select the social sharing network (41) that they wish to match with this account. After the user subscription information (42) regarding the selected social sharing network is inputted, the interaction choice of the user (11) about how the interaction will be between the selected social sharing network (41) and the user (11). It is determined in here how the interaction will be between the user actions like "sharing published contents" and/or "liking shared contents", which provide the contents to reach the large masses, and the set-top boxes. Through these preferences, some users (11) can send record command to the personal set-top boxes (80) when the like the shared contents and some of them can get action only for the contents they share. After the interaction preferences are determined, the digital broadcast user subscription account information (90) and social sharing network user subscription account information (40) are matched. Following the notification to the user (11) that the matching has been successfully completed, the matched user account information (10) and user interaction preferences are recorded to a database (20).

After the account matching, introduction of broadcast contents is carried out in social sharing networks (41). The users (11) interact differently about these content that are published in social sharing networks (41). Social media tracking application (30) requires a programming interface (API - Application Programming Interface) for being able to control the interaction between the broadcast content introductions and user (11). API control the account that shares the content introduction in the social sharing networks (41) at certain intervals and report it to the owner of the account performing the content introduction by detecting and recording the interaction of the users (11) on these sharings. Some information is predefined in the broadcast content introductions that are in interaction with the user (11). The social media tracking application (30) decrypts the required channel and time information for the operation command among from these predefined information.

After the social media tracking application (30) receives the subscription information (42) of the social sharing network users that are in interaction with the broadcast content introduction to the application programming interface, it checks these users (11) through a database (20). If it is found out after checking that the user (11) has already done the account matching, the information of the user (11) is transferred to the broadcaster information system (50) by the social media tracking application (30). If it is found out after checking that the user (11) has not done the account matching yet, an error notification is sent to the social sharing network user subscription account (40).

The social media tracking application (30) determines the operation command that is meant to be given by checking the social sharing network (41) user interaction preferences of the users (11). The matched user account information (10) confirmed in the database (20), channel and time information decrypted from the contents are transferred to the broadcaster information system (50) along with the processes command determined in accordance with the user's interaction.

It is checked in the broadcaster information system (50) whether the user (11) is subscribed with a view to controlling the authorization for giving commands for the broadcast of her/his interest. If she/he is not subscribed, the user (11) receives an error notification. When the user (11) is subscribed, it is checked whether a personal video recorder set-top box (80) is required for the operation command that is to be offered as the following step. The broadcast tagging command among the operation commands can be achieved by all the set-top boxes, but the user (11) must specially have a personal video recorder set-top box (80) for broadcast recording command. For this reason, it is checked whether the user (11) has a personal video recorder set-top box (80). If the user (11) has personal video recorder set-top box (80) and wish to issue a broadcast recording command, the operation command and relevant information are transferred to the conditional access system database (61) by the broadcaster information system (50). If the user (11) does not have a personal video recorder set-top box (80), she/he cannot issue a recording command and the user (11) receives an error notification thereof.

The conditional access system (60) continuously makes task control in conditional access system database (61) to learn if there are incoming task for it throughout the time with T factor. The conditional access system database (61) notifies it to the conditional access database system (60) when there are incoming tasks for itself. The conditional access system (60) decrypts the information that is necessary to be decrypted and adds them entitlement control message (ECM) and entitlement management message (EMM). These data are called as license control and auditing information too. These two messages check the possibility of the individual users or user groups for watching the encrypted broadcasts.

The Entitlement Control Message (ECM) is commonly an encrypted message that comprises Control Word (CW) and access criteria. The incoming ECM is decrypted and the access criteria of it is compared with the access criteria of the opposite part. In case the receiver party is an entitled one, the Control Word (CW) in it is released. The Control Word (CW) is a key for the encryption algorithm that is used for the decryption of the incoming encrypted broadcast. Entitlement management messages (EMM) are the keys that are used for the operations like interfering subscription information of the members, sending entitlement to the cards in the set-top boxes, setting set-top boxes to stand-by mode or restarting them.

The conditional access system (60) sends the corresponding entitlement management messages (EMM) to the satellite (70) as signals after creating them. Afterwards, the personal video recorder set-top boxes (80) receive these signals that are sent to the satellite (70) and the remote access of the user (K) is accomplished.

Within the scope of these basic concepts, the system (1) and the method according to the invention, which provide the sending of remote recording and/or remote broadcast tagging operation command to the personal video recorder set-top boxes (80) by means of the interacting the social sharing media (41) users with the broadcast content introductions that are shared through the social sharing networks (41), can be developed in many applications and they should not be limited the examples herein; it is substantially as defined in the claims.

## Claims

1. A method (2000) that relates to a remote access system (1) providing the users (11) to send remote record and/or remote broadcast content tagging operation commands to personal video recorders set-top boxes (80), the broadcast content being advertized through social sharing networks (41), comprising the steps of:
- advertizing the broadcast content in social media sharing networks (41) (2001),
- analyzing the content information from the broadcast content introduction in interaction with the user (11) by a social media tracking application (30) (2003),
- querying whether the users (11) in interaction have made an account matching by the social media tracking application (30) over a database (20) (2004), wherein the account matching matches a digital broadcast user subscription account information and a social sharing network user subscription account information,
- sending back the information that belongs to the user (11) to the social media tracking application (30) for conveying it into the broadcaster information system (50) (2005),
- querying whether the user (11) is a subscriber in broadcaster information system (50) (2008),
- querying whether personal video recorder set-top box (80) is required for the operation command of the user (11) in broadcaster information system (50) (2009),
- querying whether the user (11) has personal video recorder set-top box (80) in broadcaster information system (50) (2010),
- transferring the user's (11) operation command and relevant information to the conditional access system database (61) by the broadcaster information system signal server (51) (2011),
- making of the task query to the conditional access system database (61) by the conditional access system (60) (2012),
- notifying the tasks from the conditional access system database (61) to the conditional access system (60) (2013),
- creating the relevant EMM's by the conditional access system (60) (2014),
- transmitting the relevant EMM's to the satellite(70) (2015)
- allowing the satellite to forward relevant EMM's to the personal video recorder set-top box (80) via satellite (70) (2016) so that the remote access of the user (11) to the personal video recorder set-top box (80) is accomplished (2017)
**characterized in that**
- the social media tracking application (30) determines the interaction between the user and content introductions shared in the social sharing networks (41) with the help of API (2002), which controls the account that shares the content introduction in the social sharing networks (41) at certain intervals and reports it to the owner of the account performing the content introduction by detecting and recording the interaction of the users (11) on these sharings, the social media tracking application (30) also determining the operation command by checking the interaction preferences of the user (11) (2006) and transferring the matched user account information (10) confirmed in the database (20), analyzed content information and operation command of the user (11) to the broadcaster information system (50) (2007).

2. A method (1000) according to Claim 1, providing account matching before sending remote record and/or remote broadcasted content tagging command to personal video recorders set-top boxes (80) over social sharing networks (41), **characterized in** comprising;
- entering the digital broadcast user subscription information (92) to the digital broadcast data input application (12) (1001),
- selection of the social sharing network (41) by the user (11) (1002),
- entering the social sharing network user subscription information (42) (1003),
- determination of the interaction preferences specific for the social sharing network (41) selected by the user (11) (1004),
- matching the digital broadcast user subscription account information (90) and social sharing network user subscription account information (40) that belong to the user (11) (1005),
- saving the matched user account information (10) and user interaction preferences into a database (20) (1006).

3. A method (1000) according to Claim 1, **characterized in that**; the stated operation command is the broadcast recording and/or broadcasted content tagging in the determination step of the operation command (2006) according the interaction via the check of the user's (11) preferences by the social media tracking application (30).

4. A method (1000) according to Claim 1, **characterized in that**; the stated content information is the channel and time information in the decryption (2003) step of the content information from the broadcast content introductions that are in interaction with the user (11) by means of the social media tracking application (30).

5. A method (1000) according to Claim 1, **characterized in that**;the relevant error notification is notified to the user if the user (11) has not done the account matching yet within the stage (2004) where the query whether the users (11) have done account matching is executed by the social media tracking application (30) through a database (20) (2018).

6. A method (1000) according to Claim 1, **characterized in that**; the relevant error notification is notified to the user (11) (2019) if the user (11) is not subscribed within the stage of checking whether the user (11) is a subscriber (2008).

7. A method (1000) according to Claim 1, **characterized in that**; the relevant error notification is notified to the user (11) (2020) if the user (11) does not have a personal video recorder set-top box (80) within the stage of checking whether the user (11) has a personal video recorder set-top box (80) (2010).

8. A method (1000) according to Claim 1, **characterized in that**; the task query is performed again after the time with t factor is lapsed and in case no task is notified within the stage of task query (2012) to the conditional access system database (61) by the conditional access system (60).

9. A system (1) used for sending , via at least one satellite (70), remote record and/or remote broadcasted content tagging operation commands to personal video recorders set-top boxes (80) over social sharing networks (41), created in order to create groups where internet users meet each other, share contents, constitute discussion environment and people of same interests come together, said system comprising:
- at least one database (20) where the matched information (10) of the digital broadcast user subscription accounts (90) and social sharing network user subscription accounts (40) are kept,
- at least one broadcaster information system (50) where information like the subscription package of the user (11), content of the package, duration of subscription, specifications of the set-top box offered to the user (11) are saved and kept when the user (11) subscribes to a broadcast package,
- at least one broadcaster information system signal server (51) that conveys the operation command to the conditional access system database (61) with a view to provide that the user (11) can communicate it to the personal video recorder set-top box (80) via satellite (70),
- at least one broadcast information user database (52) where the information regarding the user (11) is queried,
- at least one conditional access system (60) that encrypts and/or decrypts the cryptic contents,
- at least one conditional access system database (61) where the tasks that come to the conditional access system (60) are saved,
- at least one personal video recorder set-top box (80) that has a hard disk in it for saving audio and video broadcasts and provides to convert the contents into image that are coming from the satellite (70),
**characterized in that** the system (1) further comprises: - at least one social media tracking application (30), determining the interaction between the user and content introductions shared in the social sharing networks (41) with the help of API (2002), which controls the account that shares the content introduction in the social sharing networks (41) at certain intervals and reports it to the owner of the account performing the content introduction by detecting and recording the interaction of the users (11) on these sharings, the social media tracking application (30) also determining the operation command by checking the interaction preferences of the user (11) (2006) and transferring the matched user account information (10) confirmed in the database (20), analyzed content information and operation command of the user (11) to the broadcaster information system (50) (2007).

## Patentansprüche

1. Verfahren (2000), das ein Fernzugriffssystem (1) betrifft, das den Benutzern (11) ermöglicht, die Fernaufzeichnung und/oder Fernrundfunkinhaltsmarkierungsoperationsbefehle zu persönlichen Videorecorder-Set-Top-Boxen (80) zu senden, wobei der Rundfunkinhalt durch die soziale Netzwerke (41) geworben wird, umfassend die Schritte:
- die Werbung den Rundfunkinhalt in die soziale Netzwerke (41) (2001),
- die Analyse der Inhaltsinformationen aus der Einführung des Rundfunkinhalts im Zusammenwirken mit dem Benutzer (11) durch die soziale Netzwerk-Tracking-Anwendung (30) (2003),
- Abfragen, ob die Benutzer (11) im Zusammenwirken ein Konto gemacht haben, das durch die soziale Netzwerk-Tracking-Anwendung (30) über eine Datenbank (20) übereinstimmt (2004),
wobei die Kontenanpassung mit der digitalen Rundfunkbenutzerabonnement-Kontoinformationen und der sozialen Netzwerk-Benutzerabonnement-Kontoinformationen übereinstimmt,
- die Rücksendung der dem Benutzer (11) zugehörigen Informationen an die soziale Netzwerk-Tracking-Anwendung (30) zur Übermittlung in das Rundfunksenderinformationssystem (50) (2005),
- Abfragen, ob der Benutzer (11) ein Teilnehmer im Rundfunksenderinformationssystem (50) ist (2008),
- Abfragen, ob eine persönliche Videorecorder-Set-Top-Box (80) für den Operationsbefehl des Benutzers (11) im Rundfunksenderinformationssystem (50) erforderlich ist (2009),
- Abfragen, ob der Benutzer (11) eine persönliche Videorecorder-Set-Top-Box (80) im Rundfunksenderinformationssystem (50) hat (2010),
- die Übertragung des Operationsbefehls und der relevanten Informationen des Benutzers (11) zu der Datenbank (61) für das bedingte Zugriffssystems durch den Signalisierungsserver des Rundfunksenderinformationssystem (51) (2011),
- die Erzeugung der Aufgabenabfrage zu der Datenbank (61) für das bedingte Zugriffssystems durch das bedingte Zugriffssystem (60) (2012),
- die Benachrichtigung der Aufgaben von der Datenbank (61) für das bedingte Zugriffssystems an das bedingte Zugriffssystem (60) (2013),
- die Erstellung der relevanten EMMs durch das bedingten Zugriffssystem (60) (2014),
- die Übertragung der relevanten EMMs an den Satelliten (70) (2015),
- die Bereitstellung des Satelliten, um relevante EMMs an die persönliche Videorecorder-Set-Top-Box (80) über Satellit (70) weiterzuleiten (2016), so dass der Fernzugriff des Benutzers (11) auf die persönliche Videorecorder-Set-Top-Box (80) erreicht wird (2017)
**dadurch gekennzeichnet, dass**
- die soziale Netzwerk-Tracking-Anwendung (30) bestimmt das Zusammenwirken zwischen dem Benutzer und den Inhaltseinführungen in den sozialen Netzwerken (41) mit Hilfe von API (2002), die das Konto kontrolliert, das die Inhaltseinführung in die soziale Netzwerke (41) in bestimmten Intervallen teilt und an den Besitzer des Kontos berichtet, der die Inhaltseinführung durch Erfassen und Aufzeichnen der Interaktion der Benutzer (11) auf diesen Teilen durchführt, wobei die soziale Netzwerk-Tracking-Anwendung (30) den Operationsbefehl so bestimmt, dass sie die Interaktionsvorlieben des Benutzers (11) überprüft (2006), und die übereinstimmenden Benutzerkontoinformationen (10), die in der Datenbank (20) bestätigt werden, die analysierte Inhaltsinformationen und den Operationsbefehl des Benutzers (11) zu dem Rundfunksenderinformationssystem (50) überträgt (2007).

2. Verfahren (1000) nach Anspruch 1, das die Kontenanpassung vor Übermittlung den Fernaufzeichnung und/oder Fernrundfunkinhaltsmarkierungsoperationsbefehl zu persönlichen Videorecorder-Set-Top-Boxen (80) über die soziale Netzwerke (41) bereitstellt, **dadurch gekennzeichnet, dass** es umfasst;
- die Eingabe der digitalen Rundfunkbenutzerabonnementinformationen (92) zu der digitalen Rundfunkdateneingabeanwendung (12) (1001),
- die Auswahl des soziales Netzwerks (41) durch den Benutzer (11) (1002),
- Eingeben der soziale Netzwerk-Benutzerabonnementinformationen (42) (1003),
- die Bestimmung der Interaktionspräferenzen, die für das durch den Benutzer (11) ausgewählte soziale Netzwerk (41) spezifisch sind (1004),
- die Übereinstimmung der digitalen Rundfunkbenutzerabonnement-Kontoinformationen (90) und der sozialen Netzwerk-Benutzerabonnement-Kontoinformationen (40), die dem Benutzer (11) gehören, (1005),
- die Speicherung der übereinstimmenden Benutzerkontoinformationen (10) und der Benutzerinteraktionspräferenzen in einer Datenbank (20) (1006).

3. Verfahren (1000) nach Anspruch 1, **dadurch gekennzeichnet, dass** der angegebene Operationsbefehl die Rundfunkaufzeichnung und/oder die rundgesendete Inhaltsmarkierung in dem Bestimmungsschritt des Operationsbefehls (2006) gemäß der Interaktion über die Überprüfung der Benutzerpräferenzen (11) durch die soziale Netzwerk-Tracking-Anwendung (30) ist.

4. Verfahren (1000) nach Anspruch 1, **dadurch gekennzeichnet, dass** die angegebene Inhaltsinformation die Kanal- und Zeitinformation in dem Entschlüsselungsschritt (2003) der Inhaltsinformation von den Rundfunkinhaltseinführungen, die in Interaktion mit dem Benutzer (11) durch die soziale Netzwerk-Tracking-Anwendung (30) sind, ist.

5. Verfahren (1000) nach Anspruch 1, **dadurch gekennzeichnet, dass** die relevante Fehlerbenachrichtigung dem Benutzer mitgeteilt wird, wenn der Benutzer (11) die Kontenübereinstimmung noch nicht in dem Schritt (2004) durchgeführt hat, wobei die Abfrage, ob die Benutzer (11) die Kontenübereinstimmung durchgeführt haben, durch die soziale Netzwerk-Tracking-Anwendung (30) über eine Datenbank (20) ausgeführt wird (2018).

6. Verfahren (1000) nach Anspruch 1, **dadurch gekennzeichnet, dass** die relevante Fehlerbenachrichtigung dem Benutzer (11) mitgeteilt wird (2019), wenn der Benutzer (11) nicht in dem Schritt der Überprüfung, ob der Benutzer (11) ein Teilnehmer ist, abonniert ist (2008).

7. Verfahren (1000) nach Anspruch 1, **dadurch gekennzeichnet, dass** die relevante Fehlerbenachrichtigung dem Benutzer (11) mitgeteilt wird (2020), wenn der Benutzer (11) keine persönliche Videorecorder-Set-Top-Box (80) in dem Schritt der Überprüfung, ob der Benutzer eine persönliche Videorecorder-Set-Top-Box (80) hat, hat (2010).

8. Verfahren (1000) nach Anspruch 1, **dadurch gekennzeichnet, dass** die Aufgabe-Abfrage wieder ausgeführt wird, nachdem die Zeit mit t-Faktor abgelaufen ist und falls keine Aufgabe in dem Schritt der Aufgabe-Abfrage (2012) an die Datenbank (61) für das bedingte Zugriffssystem durch das bedingte Zugriffssystem (60) gemeldet wird.

9. System (1), das zum Senden von Fernaufzeichnung und/oder Fernrundfunkinhaltsmarkierungsoperationsbefehle zu persönlichen Videorecorder-Set-Top-Boxen (80) über soziale Netzwerke (41) wenigstens einen Satelliten (70) verwendet wird, um Gruppen zu erstellen, wobei die Internetbenutzer aufeinandertreffen, Inhalte teilen, Diskussionsumgebung bilden, und die Menschen mit gleichen Interessen zusammen kommen, wobei das System umfasst:
- mindestens eine Datenbank (20), in der die übereinstimmenden Informationen (10) der digitalen Rundfunkbenutzerabonnement-Konten (90) und der sozialen Netzwerk-Benutzerabonnement-Konten (40) werden gespeichert,
- mindestens ein Rundfunksenderinformationssystem (50), in dem die Informationen wie das Abonnement-Paket des Benutzers (11), der Inhalt des Pakets, die Dauer des Abonnements, die Spezifikationen der Set-Top-Box, die dem Benutzer (11) angeboten werden, gespeichert und aufbewahrt werden, wenn der Benutzer (11) ein Rundfunkpaket abonniert hat.
- mindestens einen Signalisierungsserver des Rundfunksenderinformationssystem (51), der den Operationsbefehl an die Datenbank (61) für das bedingte Zugriffssystem überträgt, um zu gewährleisten, dass der Benutzer (11) ihn mit der persönlichen Videorecorder-Set-Top-Box (80) über Satellit (70) kommunizieren kann,
- mindestens eine Datenbank (52) für den Rundfunkinformationsbenutzer, in der die Informationen bezüglich des Benutzers (11) abgefragt werden,
- mindestens ein bedingtes Zugriffssystem (60), das den kryptischen Inhalt verschlüsselt und/oder entschlüsselt,
- mindestens eine Datenbank (61) für das bedingte Zugriffssystem, in der die Aufgaben, die zum bedingten Zugriffssystem (60) kommen, gespeichert werden,
- mindestens eine persönliche Videorecorder-Set-Top-Box (80), die über eine Festplatte verfügt, um Audio- und Videoübertragungen zu speichern und den Inhalt in ein Bild aus dem Satelliten (70) zu konvertieren,
**dadurch gekennzeichnet, dass**
das System (1) weiterhin umfasst:
mindestens soziale Netzwerk-Tracking-Anwendung (30), die das Zusammenwirken zwischen dem Benutzer und den Inhaltseinführungen in den sozialen Netzwerken (41) mit Hilfe von API (2002) bestimmt, die das Konto kontrolliert, das die Inhaltseinführung in die soziale Netzwerke (41) in bestimmten Intervallen teilt und an den Besitzer des Kontos berichtet, der die Inhaltseinführung durch Erfassen und Aufzeichnen der Interaktion der Benutzer (11) auf diesen Teilen durchführt, wobei die soziale Netzwerk-Tracking-Anwendung (30) den Operationsbefehl so bestimmt, dass sie die Interaktionsvorlieben des Benutzers (11) überprüft (2006), und die übereinstimmenden Benutzerkontoinformationen (10), die in der Datenbank (20) bestätigt werden, die analysierte Inhaltsinformationen und den Operationsbefehl des Benutzers (11) zu dem Rundfunksenderinformationssystem (50) überträgt (2007).

## Revendications

1. Un processus (2000) qui concerne un système d'accès à distance (1) qui permet aux utilisateurs (11) d'envoyer les commandes d'opération d'étiquetage du contenu d'enregistrement à distance et/ou de diffusion à distance aux boîtiers de décodage d'enregistreur vidéo personnel (80), le contenu diffusé étant annoncé à travers les réseaux de partage sociaux (41), comprenant les étapes suivantes :
- annoncer le contenu de diffusion dans les réseaux de partage sociaux (41) (2001),
- analyser l'information du contenu à partir de l'introduction du contenu diffusé dans l'interaction avec l'utilisateur (11) par une application de suivi des médias sociaux (30) (2003),
- interroger si les utilisateurs (11) en interaction ont fait un appariement des comptes par l'application de suivi des médias sociaux sur une base de données (20) (2004),
dans lequel l'appariement des comptes corresponde à une information du compte d'abonnement utilisateur de diffusion numérique et à une information du compte d'abonnement utilisateur d'un réseau de partage social,
- renvoyer l'information qui appartient à l'utilisateur (11) à l'application de suivi des médias sociaux pour la transmettre dans le système d'information de diffuseur (50) (2005),
- interroger si l'utilisateur (11) est un abonné dans le système d'information de diffuseur (50) (2008),
- interroger si le boîtier de décodage d'enregistreur vidéo personnel (80) est nécessaire pour la commande d'opération d'utilisateur (11) dans le système d'information de diffuseur (50) (2009),
- interroger si l'usager (11) a un boîtier de décodage d'enregistreur vidéo personnel (80) dans le système d'information de diffuseur (50) (2010),
- transmettre la commande d'opération d'utilisateur (11) et l'information correspondante à la base de données du système d'accès conditionnel (61) par le serveur de signal du système d'information de diffuseur (51) (2011),
- réalisation de la tâche d'interrogation à la base de données du système d'accès conditionnel (61) par le système d'accès conditionnel (60) (2012),
- notifier les tâches à partir de la base de données du système d'accès conditionnel (61) au système d'accès conditionnel (60) (2013),
- créer les EMMs correspondants par le système d'accès conditionnel (60) (2014),
- transmettre les EMMs correspondants au satellite (70) (2015),
- permettre le satellite de transférer les EMMs correspondants au boîtier de décodage d'enregistreur vidéo personnel (80) via satellite (70) (2016) pour que l'accès à distance de l'utilisateur (11) au boîtier de décodage d'enregistreur vidéo personnel (80) soit accompli (2017)
**caractérisé en ce que**
- l'application de suivi des médias sociaux (30) détermine l'interaction entre l'utilisateur et les introductions des contenus partagés dans les réseaux de partage sociaux (41) à l'aide d'API (2002), qui contrôle le compte qui partage l'introduction des contenus dans les réseaux de partage sociaux à intervalles réguliers par la détection et l'enregistrement de l'interaction des utilisateurs (11) sur ces partages, l'application de suivi des médias sociaux (30) déterminant aussi la commande d'opération par le contrôle des préférences interactionnelles de l'utilisateur (11) (206) et transmettant l'information du compte d'utilisateur correspondante (10) confirmée dans la base de données (20), l'information de contenu analysé et la commande d'opération de l'usager (11) au système d'information de diffuseur (50) (2007).

2. Un processus (1000) selon la Revendication 1, qui fournit l'appariement de comptes avant d'envoyer la commande d'étiquetage du contenu enregistré à distance et/ou diffusé à distance aux boîtiers de décodage d'enregistreur vidéo personnel (80) sur les réseaux de partage sociaux (41), **caractérisé en ce qu'**il comprend ;
- la saisie de l'information d'abonnement utilisateur de diffusion numérique (92) dans l'application de la saisie de données de diffusion numérique (12) (1001),
- la sélection du réseau de partage social (41) par l'utilisateur (11) (1002),
- la saisie de l'information d'abonnement utilisateur du réseau de partage social (42) (1003),
- la détermination des préférences interactionnelles spécifiques pour le réseau de partage social (41) choisi par l'utilisateur (11) (1004),
- l'appariement de l'information du compte d'abonnement utilisateur de diffusion numérique (90) et de l'information du compte d'abonnement utilisateur du réseau de partage social (40) qui appartiennent à l'utilisateur (11) (1005),
- la sauvegarde de l'information du compte utilisateur (10) et les préférences interactionnelles d'utilisateur (20) appariées dans une base de données (20) (1006).

3. Un processus (1000) selon la Revendication 1, **caractérisé en ce que** la commande d'opération citée est l'étiquetage du contenu de l'enregistrement de diffusion et/ou diffusé dans l'étape de détermination de la commande d'opération (2006) accordant l'interaction via le contrôle des préférences d'utilisateur (11) par l'application de suivi de média social (30).

4. Un processus (1000) selon la Revendication 1, **caractérisé en ce que** l'information du contenu citée est l'information de la chaîne et du temps dans l'étape de décryptage (2003) de l'information du contenu à partir des introductions du contenu diffusé qui sont en interaction avec l'utilisateur (11) au moyen de l'application de suivi de média social (30).

5. Un processus (1000) selon la Revendication 1, **caractérisé en ce que** la notification d'erreur correspondante est notifiée à l'utilisateur au cas où l'utilisateur (11) n'a toujours pas fait l'appariement du compte dans l'étape (2004) dans laquelle l'interrogation que les utilisateurs (11) ont fait l'appariement de compte est executée par l'application de suivi de média social (30) à travers une base de données (20) (2018).

6. Un processus (1000) selon la Revendication 1, **caractérisé en ce que** la notification d'erreur correspondante est notifiée à l'utilisateur (11) (2019) au cas où l'utilisateur (11) n'est pas abonné dans l'étape consistant à vérifier si l'utilisateur (11) est un abonné (2008).

7. Un processus (1000) selon la Revendication 1, **caractérisé en ce que** l'erreur correspondante est notifiée à l'utilisateur (11) (2020) au cas où l'utilisateur (11) n'a pas un boîtier de décodage d'enregistreur vidéo personnel (80) dans l'étape consistant à vérifier si l'utilisateur (11) a un boîtier de décodage d'enregistreur vidéo personnel (80) (2010).

8. Un processus (1000) selon la Revendication 1, **caractérisé en ce que** l'interrogation de la tâche est performée de nouveau après le temps avec le facteur f est écoulé et au cas où aucune tâche n'est notifiée dans l'étape de l'interrogation de la tâche à la base de données du système d'accès conditionnel (61) par le système d'accès conditionnel (60).

9. Un système (1) utilisé pour envoyer, via au moins un satellite (70), les commandes d'opération d'étiquetage du contenu de l'enregistrement à distance et/ou de diffusion à distance aux boîtiers de décodage d'enregistreur vidéo personnel (80) sur les réseaux de partage sociaux (41), crées afin de produire des groupes dans lesquels les utilisateurs d'internet se rencontrent, partagent des contenus, constituent un environnement de discussion et les personnes ayant les mêmes intérêts se rassemblent, ledit système comprenant :
- au moins une base de données (20) dans laquelle l'information appariée (10) des comptes d'abonnement utilisateur de diffusion numérique (90) et des comptes d'abonnement utilisateur de réseaux de partage sociaux est gardée,
- au moins un système d'information de diffuseur (50) dans lequel l'information comme le forfait d'abonnement d'utilisateur (11), le contenu du forfait, la durée d'abonnement, les spécifications du boîtier de décodage offert à l'utilisateur (11) est sauvegardée et conservée quand l'utilisateur (11) s'abonne à un forfait de diffusion,
- au moins un serveur de signal du système d'information de diffuseur (51) qui transmet la commande d'opération à la base de données du système d'accès conditionnel (61) en vue d'assurer que l'utilisateur (11) peut le communiquer au boîtier de décodage d'enregistreur vidéo personnel (80) via satellite (70),
- au moins une base de données utilisateur d'information de diffusion dans laquelle l'information relative à l'utilisateur (11) est interrogée,
- au moins un système d'accès conditionnel (60) qui encrypte et/ou décrypte les contenus cryptiques,
- au moins une base de données du système d'accès conditionnel (61) dans laquelle les tâches qui arrivent au système d'accès conditionnel (60) sont sauvegardées,
- au moins un boîtier de décodage d'enregistreur vidéo personnel (80) qui présente un disque dur dedans pour sauvegarder les diffusions audios et vidéos et permet de convertir les contenus en image qui sont émus du satellite (70),
**caractérisé en ce que**
le système (1) comprend aussi :
au moins une application de suivi de média social (30), qui détermine l'interaction entre l'utilisateur et les introductions de contenu partagées dans des réseaux de partage sociaux (41) à l'aide d'API (2002), qui contrôle le compte qui partage l'introduction du contenu dans des réseaux de partage sociaux (41) à intervalles réguliers et le rapporte au propriétaire du compte performant l'introduction du contenu par la détection et l'enregistrement de l'interaction des utilisateurs (11) sur ces partages, l'application de suivi du média social (30) aussi déterminant la commande d'opération par le contrôle des préférences interactionnelles de l'utilisateur (11) (2006) et transmettant l'information du compte utilisateur apparié confirmée dans la base de données (20), l'information du contenu analysée et la commande d'opération de l'utilisateur (11) au système d'information du diffuseur (50) (2007).
